(19) Europäisches Patentamt
European Patent Office
Office européen des brevets

(11) Veröffentlichungsnummer: **0 017 857**
**A1**

# (12) EUROPÄISCHE PATENTANMELDUNG

(21) Anmeldenummer: **80101761.7**

(22) Anmeldetag: **02.04.80**

(51) Int. Cl.³: **C 04 B 13/28**

(30) Priorität: **10.04.79 DE 2914458**
**04.07.79 DE 2926951**

(43) Veröffentlichungstag der Anmeldung: **29.10.80**
**Patentblatt 80/22**

(84) Benannte Vertragsstaaten: **AT BE CH FR GB IT LI LU NL SE**

(71) Anmelder: **Wüstefeld, Bernd, Dr.,**
**Heinrich-Hertz-Strasse 43, D-2000 Hamburg 76 (DE)**
Anmelder: **Wüstefeld, Aloys, Dr., Panoramaweg 17,**
**D-7035 Waldenbuch (DE)**
Anmelder: **Wüstefeld, Claus, Panoramaweg 17,**
**D-7035 Waldenbuch (DE)**

(72) Erfinder: **Wüstefeld, Bernd, Dr.,**
**Heinrich-Hertz-Strasse 43, D-2000 Hamburg 76 (DE)**
Erfinder: **Wüstefeld, Aloys, Dr., Panoramaweg 17,**
**D-7035 Waldenbuch (DE)**
Erfinder: **Wüstefeld, Claus, Panoramaweg 17,**
**D-7035 Waldenbuch (DE)**

(74) Vertreter: **Schwindling, Hans, Dipl.-Phys. et al,**
**Kohler-Schwindling-Späth Patentanwälte**
**Hohentwielstrasse 41, D-7000 Stuttgart 1 (DE)**

## (54) Verfahren zur Herstellung von zementgebundenen Formkörpern.

(57) Bei einem Verfahren zur Herstellung von zementgebundenen Formkörpern, bei dem aus Zement, Zuschlagstoffen und Wasser eine Mischung hergestellt und die Mischung zum Abbinden und Erhärten gebracht wird, wird der Mischung eine Alkylverbindung mit einer Sauerstoff und Schwefel enthaltenden funktionellen Gruppe oder, wenn es sich bei der Alkylverbindung um eine Säure handelt, ein wasserlösliches Metallsalz einer solchen Säure in einer Menge von 0,5 bis 1 Gew.-% des eingesetzten Zementes zugesetzt. Bevorzugt wird als Alkylverbindung eine Alkylsulfamidocarbonsäure mit 8 bis 18 C-Atomen, insbesondere mit 12 C-Atomen, in der Alkylkette verwendet. Das Verfahren ermöglicht die Anwendung von Zement mit sehr feinen Kornfraktionen sowie das Arbeiten mit grossem Wasserüberschuss. Insbesondere können Faserwerkstoffe nach Art von Asbestzement unter Verwendung von anderen Fasermaterialien hergestellt werden.

EP 0 017 857 A1



BAD ORIGINAL

0017857

Anmelder:

Dr. Bernd Wüstefeld
Heinrich-Hertz-Straße 43
2000 Hamburg 76

Dr. Aloys Wüstefeld
Panoramaweg 17
7035 Waldenbuch

Claus Wüstefeld
Panoramaweg 17
7035 Waldenbuch

Vertreter:

Kohler - Schwindling - Späth
Patentanwälte
Hohentwielstraße 41
7000 Stuttgart 1

## Verfahren zur Herstellung von zementgebundenen Formkörpern

Die Erfindung betrifft ein Verfahren zur Herstellung von zementgebundenen Formkörpern, bei dem aus Zement, Zuschlagstoffen und Wasser eine Mischung hergestellt und die Mischung zum Abbinden und Erhärten gebracht wird.

Unter Zement sollen hier alle hydraulischen Bindemittel verstanden werden, die bei der Abbindung Calciumsilikathydrate und/oder Calciumaluminathydrate bilden.



BAD ORIGINAL

Unter Formkörper sollen alle Gebilde verstanden werden, die aus zementgebundenen Materialien oder Zuschlagstoffen bestehen, beginnend bei Bauteilen aus Ortbeton über Fertigbauteile und zementgebundenen Bauplatten bis hin zu zementgebundenen Faserwerkstoffen wie Asbestzement.

Für die Herstellung von zementgebundenen Formkörpern sind zwei Größen von Bedeutung, nämlich der Kornaufbau des Zementes und die Menge der zur Herstellung der aus Zement und Zuschlagstoffen bestehenden Mischung verwendeten Wassermengen. An sich wäre zu erwarten, daß die Dichte und damit die Festigkeit des Formkörpers umsomehr zunimmt je feinere Anteile der Zement enthält. Es hat sich jedoch herausgestellt, daß eine untere Grenze der Feinmahlung existiert, bei deren Unterschreitung das Erhärtungsvermögen der Mischung und die Festigkeit der Formkörper abnimmt. Dabei ist noch immer ungeklärt, wo die genaue Grenze für die Feinmahlung des Zementes liegt und welche Abhängigkeit zwischen dem Kornaufbau des Zementes und seiner Verarbeitungsweise existiert.

Die Frage des Kornaufbaus des Zementes steht in engem Zusammenhang mit der Frage, wie schnell die einzelnen Kornfraktionen bei der Hydratation des Zementes verbraucht werden, was wiederum von der Geschwindigkeit abhängt, mit welcher der Hydratationsvorgang in das Innere der einzelnen Zementkörner eindringt. In dieser Hinsicht ist dann auch der Wasser-Zement-Faktor von Bedeutung, weil anzunehmen ist, daß die Qualitätsverminderung der Formteile bei Arbeiten mit Wasserüberschuß darauf zurückzuführen ist, daß die Hydratation des Zementes dann zu schnell erfolgt, wodurch die Bindeeigenschaften des Zementes beeinträchtigt werden. Eine Ausnahme bildet die Herstellung von Asbestzement, bei der mit einem ausserordentlich



BAD ORIGINAL

hohen Wasserüberschuß gearbeitet wird. Es war jedoch bisher nur möglich, Asbestzement mit extrem feinfaserigem Asbest herzustellen (Faserstärke von etwa 1 /um), so daß dem extrem feinfaserigen Zuschlagsstoff eine entscheidende Rolle beizumessen ist, wenngleich auch ungeklärt ist, welche Wirkung dieses feinfaserige Material hat. Mit Asbestfasern größerer Stärke sowie mit anderen Mineralfasern konnte bisher keine dem Asbestzement vergleichbaren Produkte hergestellt werden.

Es würde demgegenüber einen erheblichen technischen Fortschritt bedeuten, wenn es gelänge, den Hydratationsvorgang derart zu beeinflussen, daß einerseits ein Zement benützt werden kann, dessen Kornaufbau feinere Kornfraktionen umfasst als bisher, und daß andererseits ein Arbeiten mit Wasserüberschuß keine nachteiligen Folgen für das Abbinden und Erhärten des Zementes hat.

Der Erfindung liegt demnach die Aufgabe zugrunde, ein Verfahren anzugeben, das eine solche Beeinflussung des Hydratationsvorganges ermöglicht.

Diese Aufgabe wird nach der Erfindung dadurch gelöst, daß der Mischung eine Alkylverbindung mit einer Sauerstoff und Schwefel enthaltenden funktionellen Gruppe oder ein wasserlösliches Metallsalz einer solchen Verbindung in einer Menge von 0,5 bis 1 Gew. % des eingesetzten Zementes zugesetzt wird.

Die der Mischung zugesetzte Alkylverbindung der genannten Art hat die Wirkung, daß sie die Hydratation stark bremst, wenn mit einem Wasserüberschuß gearbeitet wird, während bei normalem Wasser-Zement-Faktor die Hydratation und die Erhärtung beschleunigt und verstärkt werden. Ein weiterer Vor-



BAD ORIGINAL

0017857

teil des Zusatzes von solchen Alkylverbindungen liegt darin, daß eine höhere Dichtigkeit des Beton erzielt wird, die durch die Verwendung eines feiner gemahlenen Zements noch gefördert werden kann, weil die feiner gemahlenen Zemente, die den dichteren Beton liefern, jedoch sehr wasserempfindlich sind, durch die Alkylsulfamidocarbonsäure geschützt werden.

Der Schutz des Zementes, der durch die genannten Alkylverbindungen durch starkes Bremsen der Hydratation erzielt wird, macht es auch möglich, zementgebundene Faserwerkstoffe aus Mineralfasern herzustellen, die einen sehr viel größeren Durchmesser haben als die bisher verwendeten Asbestfasern, so daß sie die Schutzwirkung der Asbestfasern nicht entfalten, obwohl auch bei der Herstellung solcher Faserwerkstoffe aus anderen Mineralfasern mit einem hohen Wasserüberschuß gearbeitet werden muß. Die Erfindung eröffnet daher die Möglichkeit zur Herstellung völlig neuartiger Werkstoffe.

Weiterhin kann bei bisher bekannten Faser-Zement-Werkstoffen, die unter Beachtung des Wasser-Zement-Faktors hergestellt wurden, durch die erfindungsgemäße Anwendung der genannten Alkylverbindungen eine Festigkeitssteigerung bis zum 300 % und bereits nach einer Abbindezeit von zwei Stunden eine Druckfestigkeit von etwa 1.000 $N/cm^2$ erhalten werden.

Für die Praxis brauchbare Alkylverbindungen sind insbesondere Alkylsulfamidocarbonsäuren, die 8 bis 18 C-Atome in der Alkylkette aufweisen. Als besonders wirksam haben sich die Alkylsulfamidocarbonsäuren mit 12 C-Atomen in der Alkylkette erwiesen.

- 5 -

BAD ORIGINAL

0017857

Ebenfalls besonders gute Ergebnisse werden erzielt, wenn bei einem Verfahren der eingangs genannten Art als Alkylverbindung ein oder mehrere Alkylsulfate, Alkylsulfonsäuren und/oder Alkylsulfonsäure-Derivate eingesetzt werden.

Bei den Alkylsulfaten kann es sich insbesondere um n-Alkylsulfate $CH_3-(CH_2)_n-CH_2-O-SO_3H$ mit n = 8 bis 18 handeln, oder auch um sekundäre Alkylsulfate

$$CH_3-(CH_2)_n-\underset{\displaystyle |\atop \displaystyle O\,O_3H}{CH}-(CH_2)_m-CH_3$$

mit n = 8 - 18
und m = 2 - 12

Von den Alkylsulfonsäuren sind insbesondere n-Alkylsulfonsäuren $CH_3-(CH_2)_n-SO_3H$ mit n = 8 - 18 und sekundäre Alkylsulfonsäuren

$$CH_3-(CH_2)_n-\underset{\displaystyle SO_3H}{CH}-(CH_2)_m-CH_3$$

mit n = 8 - 18
und m = 2 - 12

besonders geeignet. Verwendbare reaktive Derivate der Alkylsulfonsäuren sind insbesondere die Alkylsulfochloride $CH_3-(CH_2)_n-SO_2Cl$ mit n = 8 - 18 sowie die Alkylsulfamide $CH_3-(CH_2)_n-SO_2NH_2$ mit n = 8 - 18.

Wie oben erwähnt, können statt der Alkylsulfamidocarbonsäuren und der Alkylsulfonsäuren auch deren neutrale Metallsalze verwendet werden. Dabei ist es



BAD ORIGINAL

möglich, die Salze unmittelbar in der Mischung selbst zu erzeugen, indem der Mischung ausser der Säure zu deren Neutralisierung Metallbasen zugesetzt werden. Als besonders geeignet haben sich Lithiumbasen erwiesen.

Die oben erwähnte, vorteilhafte Wirkung der bei dem erfindungsgemäßen Verfahren verwendeten Zusätze beruht vermutlich auf der Bildung unlöslicher komplexer Verbindungen mit den Calciumaluminathydraten des Zementes. Für die Bildung dieser unlöslichen komplexen Verbindungen sind die Sauerstoff und Schwefel enthaltenden funktionellen Gruppen der angegebenen Zusatzstoffe verantwortlich.

Die Bildung unlöslicher komplexer Verbindungen führt zu dem weiteren Vorteil, daß insbesondere dann, wenn mit hohem Wasserüberschuß gearbeitet wird, die erfindungsgemäß angewendeten Zusatzstoffe sich nicht in dem bei der Entwässerung der Zementmischung abfließenden Wassers anreichern, wenn das Wasser im Kreislauf wieder verwendet wird, was aus Gründen des Umweltschutzes notwendig ist.



BAD ORIGINAL

Ein weiterer Vorteil der Anwendung der Zusatzstoffe nach dem erfindungsgemäßen Verfahren besteht darin, daß der Zusatz der angegebenen Verbindungen das sogenannte "Gipstreiben" im Beton verhindert, das auf der Bildung von komplexen Calciumaluminattrisulfat infolge des in der Regel vorhandenen Sulfatgehaltes des Zementes beruht. Die Bildung unlöslicher komplexer Verbindungen zwischen den eingesetzten Zusatzstoffen und den Calciumaluminathydraten des Zementes verhindert die Bildung von Calciumaluminatrisulfat durch eine Reaktion mit Kalksulfat und verhindert dadurch sehr gefürchtete Betonschäden. Das gleiche gilt für die Verhinderung einer Korrosion des Betons durch sulfathaltige Wässer. Zugleich wird durch die erfindungsgemäßen Zusätze der Korrosionsschutz von Stahleinlagen in Beton bedeutend verbessert. In dieser Hinsicht sind die Alkylsulfamidocarbonsäuren besonders wirksam.



BAD ORIGINAL

Bei der Verwendung von Mineralsfasern als Zuschlagsstoff kann, wie bei der Herstellung von Asbestzement, mit großem Wasserüberschuß gearbeitet werden. Es wird dann aus dem Zement und den Mineralfasern ein dünnflüssiger Brei hergestellt, der einer Papiermaschine zugeführt werden kann und sich auf derselben unter Abgabe der Hauptmenge des Wassers in eine Art Pappe verwandelt, in der der Zement in dem aus den Mineralfasern gebildeten Gerüst festgehalten wird. Umfangreiche Versuche haben ergeben, daß auf diese Weise hergestellte Faserwerkstoffe dann ihre größte Festigkeit haben, wenn zur Erzeugung eines Körpers, der bei einem Gewicht von 1oo g das Volumen V besitzt, eine Zementmenge R in g verwendet wird, die sich nach der Formel

$$V = 250\ (100/R - 1)$$

errechnet. Diese Formel gilt in einem praktischen Bereich für R von 35 bis 85 g.

Es hat sich gezeigt, daß der gleiche funktionelle Zusammenhang zwischen V und R in dem angegebenen Bereich auch durch die Formel

$$R = 100 . e^{-\left(\frac{V}{\overline{V}}\right)^{n}}$$

beschrieben wird. In dieser Gleichung bedeutet $\overline{V}$ dasjenige Volumen, das bei einem Zementanteil von 100/e = 36,79 g erhalten wird. Der Koeffizient n wurde zu 0,68 ermittelt. Aus der letztgenannten Formel errechnen sich die folgenden Volumina und Raumgewichte:



BAD ORIGINAL

| R | $\frac{V}{\overline{V}}$ | V | $\frac{100}{V}$ = r |
|---|---|---|---|
| 36,79 | 1 | 429 | 0,23 |
| 50,00 | 0,58 | 250 | 0,40 |
| 75,00 | 0,19 | 83,3 | 1,20 |

Die vorstehend wiedergegebene Exponentialgleichung hat einen Aufbau, der der bekannten Exponentialfunktion für die Kornkennlinie von Mahlgütern nach Rosin-Rammler entspricht. Diese Exponentialfunktion hat die Formel

$$R = 100 \cdot e^{-\left(\frac{x}{\bar{x}}\right)^{n}}.$$

In dieser Gleichung bedeutet R den gewichtsmässigen Siebrückstand bei der Korngröße x, $\bar{x}$ diejenige Korngröße, für die der Siebrückstand R = 100/e = 36,79 ist,und n eine nach Stoffart und Feinheitsgrad zwischen etwa 0,7 und 1,5 schwankende Konstante. Ein großes n bedeutet einen geringen Feinmehlanteil, während ein kleines n einen großen Feinmehlanteil hat. Für einen üblichen Handelszement hat das statistische Mittelkorn $\bar{x}$ einen Durchmesser von etwa 35 bis 40 µm.

Die Übereinstimmung der beiden Formeln ist daraus zu erklären, daß die als Zuschlagsstoff verwendeten Mineralfasern als Feinanteil des die Zuschlagsstoffe und den Zement umfassenden Gesamtgemisches betrachtet werden können. Mahlgüter mit unterschiedlicher Mittelfeinheit,jedoch mit demselben Gleichmäßigkeitskoeffizienten n = 0,68 haben die gleiche Raumerfüllung. Deshalb kann die oben angegebene Exponentialgleichung für Mischgüter mit feineren und auch für solche mit gröberen Fasern angewendet werden.

BAD ORIGINAL

Derselbe Gleichmäßigkeitskoeffizient für verschiedene Mischungen bedeutet nicht, daß beide Mischungen die gleiche Kornkennlinie besitzen, sondern, daß ihre Kornkennlinien zueinander parallel verlaufen und beide Mischungen durchaus eine unterschiedliche Mittelfeinheit $\bar{x}$ haben können. Demgemäß gilt die Exponentialgleichung für alle Mischungen, die zueinander parallel verlaufende Kornkennlinien haben. Dagegen wird die Raumerfüllung der Faser-Zement-Körper von der Parallelverschiebung der Kornkennlinien nicht verändert, solange nur der Gleichmäßigkeitskoeffizient konstant bleibt. Beispielsweise hat auch ein Kugelhaufwerk, das aus gleichgroßen Kugeln besteht, unabhängig vom Kugeldurchmesser stets den gleichen Hohlraum von 38 %.

Die Analogie zwischen den beiden Exponentialgleichungen läßt den Schluß zu, daß der porenmäßige Aufbau des nach der Erfindung hergestellten Faserwerkstoffes durch den kornmäßigen Aufbau des Zementes und den zusätzlichen Feinanteilen in Form der dispergierten Fasern bestimmt wird. Dafür spricht auch der sehr niedrige Wert des Gleichmäßigkeitskoeffizienten. Dabei ist von besonderer Bedeutung, daß der kornmäßige Aufbau des Zementpulvers dank der Zugabe der Alkylverbindungen nicht durch vorzeitige Hydratisierung infolge des großen Wasserüberschusses verändert wird. Von praktischer Bedeutung ist auch die Fähigkeit der Alkylverbindungen, die Feinanteile des Zementes zu agglomerieren, so daß immer die Feinanteile der Mischung aus Fasern bestehen. Dieser Wirkung der Alkylverbindungen kommt man entgegen, wenn man vorzugsweise für leichtere Körper mit geringem Zementanteil grobe Mineralfasern und für schwerere Körper mit grösserem Zementanteil feinere Mineralfasern verwendet.

Werden bei der Herstellung eines Mineralfasern als Zuschlag-



BAD ORIGINAL

stoff enthaltenden Werkstoffes die genannten Regeln und Formeln berücksichtigt, erhält man Werkstoffe mit hohen Festigkeitswerten, die je nach Raumgewicht die entsprechenden Werte von Mörtel und Beton bedeutend übertreffen, insbesondere bezüglich der Zugfestigkeit und der Biegefestigkeit. Faserwerkstoffe mit einem Raumgewicht von mindestens 1 g/cm$^3$ und einer Druckfestigkeit von 6.000 bis 8.000 N/cm$^2$ können eine Zugfestigkeit bis zu 2.500 N/cm$^2$ und eine Biegefestigkeit bis zu 6.000 N/cm$^2$ aufweisen. Ferner wird bei der Herstellung dieser Werkstoffe die Bindezeit soweit verkürzt, daß der Zement nicht nur innerhalb von 2 Stunden erstarrt, sondern daß nach Ablauf dieser Zeit bereits eine Druckfestigkeit von 1.000 N/cm$^2$ erreicht ist. Auch bei leichteren Körpern wurden hohe Festigkeitswerte erreicht, die im Durchschnitt um 300% höher lagen als Körper gleichen Raumgewichtes, die ohne den Zusatz von Alkylsulfamidocarbonsäure hergestellt wurden.

Das erfindungsgemäße Verfahren wird nachstehend anhand einiger Beispiele näher erleutert, welche die Herstellung von Faserwerkstoffen betreffen.

Bei allen Versuchen, die in der nachstehenden Tabelle zusammengefasst sind, wurden jeweils 40 g Mineralwolle (Glaswolle, Steinwolle und Keramikwolle) in 1.500 ml Wasser aufbereitet. Die Aufbereitung erfolgte mit einem Rührwerk in einstündiger Behandlungszeit. Dabei wurde die Wolle in Form einzelner Fasern von etwa 1 - 2 cm Länge im Wasser dispergiert, wogegen nichtfaserige Anteile sich zu Boden setzten. Die Dispersion der Mineralfasern wurde von den abgesetzten, nichtfaserigen Anteilen durch dekantieren abgetrennt. Zu dem so erhaltenen Faserbrei wurden, jeweils auf die Zementmenge bezogen, nacheinander 0,1 Gew.% Lithiumcarbonat ($Li_2CO_3$),



BAD ORIGINAL

0,24 Gew.% Kaliumcarbonat ($K_2CO_3$) und 0,7 % Alkylsulfamidocarbonsäure hinzugefügt. Als Alkylsulfamidocarbonsäure wurde eine Produkt verwendet, welches die Firma Hoechst AG unter der Bezeichnung "Emulsogen H" als Korrosionsschutzmittel und Schmiermittelzusatz vertreibt. Die Alkylsulfamidocarbonsäure setzt sich mit den zuvor zugefügten Lithium- und Kaliumsalzen zu den entsprechenden Metallsalzen um. Danach erfolgte die Zugabe des Zementes in den in der Tabelle angegebenen Mengen. Die Zugabe der Stoffe und des Zementes erfolgte unter ständigem Rühren und es wurde die Masse nach Zugabe des Zementes noch weitere 10 Minuten durchgearbeitet.

Der auf diese Weise erhaltene, trübungsfreie Faserzementbrei wurde dann über einem Rundsieb entwässert und geformt. Dabei wurde weiteres Wasser auf einer Filzunterlage abgesaugt und durch leichten Druck die Höhe der Platte auf das errechnete Volumen eingestellt. Nach 2 Stunden Abbindezeit waren die Platten transportfähig und konnten gestapelt werden. Das Abbinden der Proben und das anschliessende Erhärten erfolgte in Luft bei 20 Grad Celcius. Dabei wurde für die in der nachstehenden Tabelle aufgeführten Versuche 1 - 6 im wesentlichen das gleiche Verhalten beobachtet, abgesehen davon, daß sich die Abbindezeit mit zunehmendem Zementgehalt verkürzte. Jedoch war bei allen Proben die Abbindezeit so kurz, daß nach 2 Stunden ein Stapeln möglich war. Allerdings war hierfür ein schnelles Absaugen des überschüssigen Wassers auf der Filzunterlage erforderlich. Dagegen liess sich die Probe gemäss Versuch Nr. 7 bei Umgebungstemperatur nur sehr schwer entwässern. Daher wurde die Abbindezeit sehr stark verlängert. Es wurden mehr als 24 Stunden benötigt. Die Abbindezeit kann jedoch durch Anwendung erhöhter Temperaturen bedeutend vermindert werden.



BAD ORIGINAL

0017857

| Versuchs-Nr. | Fasermaterial | Faserdicke in µm | Tonerdezementzusatz pro 40 g Faserwolle (g) | Tonerdezement + Fasermaterial | Gewicht mit Hydratwasser (g) | Volumen cm³ | Raumgewicht wasserfrei |
|---|---|---|---|---|---|---|---|
| 1 | Glaswolle | ≤35 | 23 | 63 | 72 | 272 | 0,23 |
| 2 | Steinwolle | ≤22 | 46 | 86 | 100 | 187 | 0,46 |
| 3 | Keramikwolle | ≤11 | 110 | 150 | 200 | 137 | 1,10 |
| 4 | Glaswolle | ≤35 | 46 | 86 | 105 | 187 | 0,46 |
| 5 | Keramikwolle | ≤11 | 46 | 86 | 107 | 187 | 0,46 |
| 6 | Steinwolle | ≤22 | 23 | 63 | 70 | 272 | 0,23 |
| 7 | Keramikwolle | ≤11 | 23 | 63 | 70 | 272 | 0.23 |

BAD ORIGINAL

- 14 -

Die Anwendung der anderen, oben erwähnten Alkylverbindungen erfolgt in genau der gleichen Weise wie die vorstehend beschriebene Anwendung der Alkylsulfamidocarbonsäuren. Auch die Ergebnisse sind praktisch die gleichen. Bei einer Wiederholung der vorstehend beschriebenen Versuche unter Einsatz der vorstehend angegebenen Zusatzstoffe wurden im wesentlichen die gleichen Ergebnisse erzielt, so daß die gesonderte Beschreibung entsprechender Beispiele unterbleiben kann. Trotzdem wird nachstehend nochmals ein typisches Beispiel zur Erläuterung der Erfindung angegeben.

Aus 100 Gew.T. Portland-Zement, 15 Gew.T. Keramikfasern und 1.000 Gew.T Wasser wurde eine Mischung hergestellt, zu der 1 Gew.T. eines Alkylsulfochlorid hinzugefügt wurde, das von der Firma Bayer unter der Bezeichnung "Mersol" vertrieben wird. Die Mischung wurde in einem kräftigen Rührwerk mindestens 30 Minuten durchgearbeitet. Bei der großtechnischen Anwendung kann hierfür ein Holländer verwendet werden. Der wegen des großen Wasserüberschusses dünnflüssige Brei wurde anschließend auf einem Rundsieb und dann auf einer Filzunterlage entwässert. Die Mischung war trübungsfrei, das Wasser lief klar ab. Endlich wurde das für die Erhärtung nicht mehr erforderliche Restwasser abgepreßt. Das nach dem Aushärten erhaltene Endprodukt hatte eine Druckfestigkeit von mehr als 6.000 $N/cm^2$.

In dem aus der Mischung abfließenden bzw. abgezogenen Wasser konnte keine Restmenge des eingesetzten Alkylsulfochlorid festgestellt werden, was für die großtechnische Anwendung aus den oben genannten Gründen von besonderer Bedeutung ist.



BAD ORIGINAL

## Patentansprüche

1. Verfahren zur Herstellung von zementgebundenen Formkörpern, bei dem aus Zement, Zuschlagstoffen und Wasser eine Mischung hergestellt und die Mischung zum Abbinden und Erhärten gebracht wird, dadurch gekennzeichnet, daß der Mischung eine Alkylverbindung mit einer Sauerstoff und Schwefel enthaltenden funktionellen Gruppe oder ein wasserlösliches Metallsalz einer solchen Verbindung in einer Menge von 0,5 bis 1 Gew. % des eingesetzten Zementes zugesetzt wird.

2. Verfahren nach Anspruch 1, dadurch gekennzeichnet, daß als Alkylverbindung eine Alkylsulfamidocarbonsäure mit 8 bis 18 C-Atomen, vorzugsweise mit 12 C-Atomen, in der Alkylkette eingesetzt wird.

3. Verfahren nach Anspruch 1, dadurch gekennzeichnet, daß als Alkylverbindung ein oder mehrere Alkylsulfate, Alkylsulfonsäuren und/oder Alkylsulfonsäure-Derivate eingesetzt werden.

4. Verfahren nach Anspruch 3, dadurch gekennzeichnet, daß geradkettige Alkylverbindungen eingesetzt werden, die in der Alkylkette 10 - 20 C-Atome aufweisen.

5. Verfahren nach Anspruch 3, dadurch gekennzeichnet, daß sekundäre Alkylverbindungen nach der allgemeinen Formel

$$CH_3-(CH_2)_n-\underset{R}{\underset{|}{C}}H-(CH_2)_m-CH_3$$

eingesetzt werden, in der n eine ganze Zahl von 8 - 18, m eine ganze Zahl von 2 - 12 und R die Sauerstoff und Schwefel enthaltende funktionelle Gruppe bedeutet.



BAD ORIGINAL

6. Verfahren nach einem der vorhergehenden Ansprüche, dadurch gekennzeichnet, daß der Mischung zur Neutralisierung von Alkylsulfamidocarbonsäuren oder Alkylsulfonsäuren Metallbasen, insbesondere Lithiumbasen, zugesetzt werden.

7. Verfahren nach einem der vorhergehenden Ansprüche unter Verwendung von Mineralfasern als Zuschlagstoff, dadurch gekennzeichnet, daß die Mischung mit großem Wasserüberschuß hergestellt und zur Erzeugung eines Körpers, der bei einem Gewicht von 100 g das Volumen V besitzt, eine Zementmenge R in G verwendet wird, die sich nach der Formel

$$V = 250\ (100/R - 1)$$

errechnet.

BAD ORIGINAL

Europäisches Patentamt

# EUROPÄISCHER RECHERCHENBERICHT

0017857

Nummer der Anmeldung

EP 80 10 1761.7

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| X | US - A - 3 864 141 (UCHIKAWA et al.)<br>* Spalte 4, Zeilen 64 bis 66; Tabelle 6 *<br>-- | 1,3 | C 04 B 13/28 |
| X | DE - A1 - 2 612 008 (BAYER AG)<br>* Ansprüche *<br>-- | 1,3,<br>4 | |
| X | DE - B - 1 646 414 (BASF)<br>* Anspruch *<br>-- | 1 | |
| | DE - B - 1 646 524 (FARBWERKE HOECHST)<br>* Spalte 2, Zeilen 51 bis 64 *<br>-- | 1-3 | RECHERCHIERTE SACHGEBIETE (Int. Cl.3) |
| | DE - A - 2 131 518 (BAYER AG)<br>* Ansprüche *<br>-- | 1-3,<br>6 | C 04 B 13/00<br>C 04 B 15/00<br>C 04 B 17/00<br>C 04 B 31/30 |
| | DE - A1 - 2 636 271 (TERMIKA)<br>* Seite 3 *<br>---- | 1-5,<br>6 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentanspruche erstellt.

| Recherchenort | Abschlußdatum der Recherche | Prüfer |
|---|---|---|
| Berlin | 24-06-1980 | HÖRNER |



BAD ORIGINAL